Europäisches Patentamt

European Patent Office

Office européen des brevets

(19)

(11) Veröffentlichungsnummer: **0 125 429**
**B1**

(12) **EUROPÄISCHE PATENTSCHRIFT**

(45) Veröffentlichungstag der Patentschrift:
30.08.89

(21) Anmeldenummer: 84102980.4

(22) Anmeldetag: 17.03.84

(51) Int. Cl.⁴: **G 02 B 23/08**, G 01 S 17/08,
G 02 B 23/02

(54) Optisches System für ein Visier.

(30) Priorität: 17.05.83 CH 2677/83

(43) Veröffentlichungstag der Anmeldung:
21.11.84 Patentblatt 84/47

(45) Bekanntmachung des Hinweises auf die Patenterteilung: 30.08.89 Patentblatt 89/35

(84) Benannte Vertragsstaaten:
AT BE CH DE FR GB IT LI NL SE

(56) Entgegenhaltungen:
DE–B– 1 623 515
DE–B– 1 941 110
DE–B– 2 656 673
DE–B– 2 714 412
DE–B– 2 817 237
DE–U– 6 918 690
FR–A– 1 451 746

(73) Patentinhaber: CONTRAVES AG
Schaffhauserstrasse 580
CH-8052 Zürich (CH)

(72) Erfinder: Arndt, Klaus
Münzelweg 327d
CH-5506 Mägenwil (CH)
Erfinder: Sanvido, Saverio
Fabrikstrasse 3
CH-8152 Glattbrugg (CH)

## Beschreibung

Die Erfindung bezieht sich auf ein optisches System für ein Visier in Periskopbauart zur Ortung, Verfolgung und zur Vermessung eines Zieles mit einem aus einem Sender und einem Empfänger bestehenden Laser-Entfernungsmesser.

Die der Erfindung zugrunde liegende Aufgabe wird darin gesehen, für ein Visier der genannten Art den optischen System-Aufbau unter Verzicht eines Aufrichteprismas möglichst einfach und wirtschaftlich zu gestalten und dabei die Integration eines Laser-Entfernungsmessers unter Beibehaltung hoher Vermessungs-Genauigkeit zu ermöglichen.

Gemäss der Erfindung wird diese Aufgabe durch die im kennzeichnenden Teil der Patentanspruchs 1 definierte Anordnung der wesentlichen optischen Bauteile gelöst.

Weitere Merkmale der Erfindung ergeben sich aus der folgenden Beschreibung in Verbindung mit der Zeichnung und den Patentansprüchen.

Die Erfindung wird nachstehend anhand eines Ausführungsbeispiels unter Bezugnahme auf die Zeichnung näher beschrieben. Es zeigt:

Fig. 1 ein schematisch dargestelltes Visier mit dem in einem Gehäuse angeordneten optischen System, und

Fig. 2 das in grösserem Massstab und perspektivisch dargestellte optische System gemäss Fig. 1.

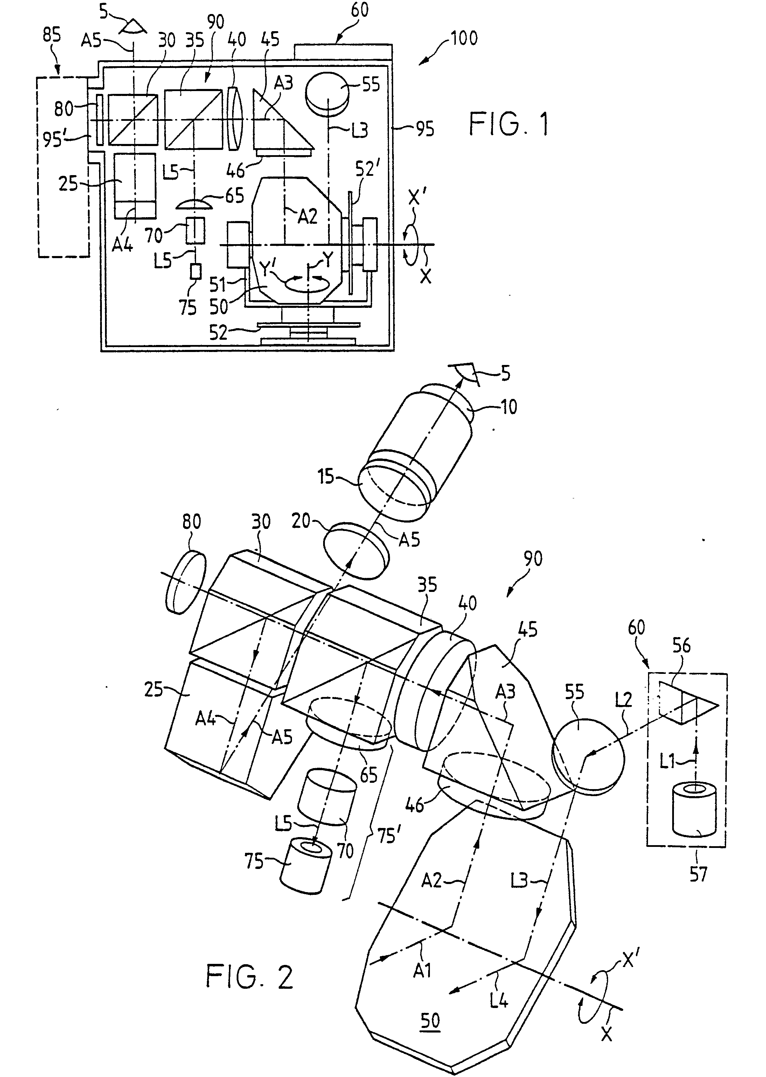

In Fig. 1 ist mit 100 ein schematisch dargestelltes Visier bezeichnet, welches im wesentlichen ein Gehäuse 95, ein darin angeordnetes optisches System 90 sowie einen in Fig. 1 nur teilweise dargestellten Laser-Entfernungsmesser 60 umfasst. Das in Fig. 1 und Fig. 2 dargestellte und die Strahlen beziehungsweise die optischen Achsen A1, A2, A3, A4 und A5 umfassende optische System 90 ist als erste funktionsbestimmende Einheit und der die Strahlen L1, L2, L3, L4 und L5 umfassende Laser-Entfernungsmesser 60 als zweite funktionsbestimmende Einheit ausgebildet.

Das in Fig. 2 perspektivisch und in grösserem Massstab dargestellte optische System 90 umfasst in Richtung der optischen Strahlung oder Achsen A1 bis A5 gesehen im wesentlichen einen Hauptspiegel 50, ein erstes Umlenkprisma 45, ein erstes Objektiv 40, einen ersten Strahlenteiler 35, einen zweiten Strahlenteiler 30, ein zweites Umlenkprisma 25, eine Strichplatte 15 sowie ein Okular 10, welches dem Auge 5 eines Beobachters Einblick in das Visier 100 gewährt.

Weiterhin erkennt man in Fig. 2 in Richtung der Strahlung L1 bis L5 gesehen den im wesentlichen mit einem Lasersender 57 und einem Umlenkprisma 56 versehenen Laser-Entfernungsmesser 60, welchem ein Umlenkspiegel 55 entsprechend zugeordnet ist. In Richtung der Strahlung A3 ist im Abstand zu dem Umlenkspiegel 55 im Bereich des ersten Strahlenteilers 35 ein Laser-Empfängerteil 75' angeordnet, welches im wesentlichen zwei optische Elemente 65 und 70 sowie den eigentlichen Empfänger 75 umfasst. Hierbei ist das Element 65 eine Linse und das Element 70 ein als Lochblende ausgebildetes Linsensystem.

In Richtung der Strahlung A5 gesehen ist zwischen dem zweiten Umlenkprisma 25 und dem Okular 10 ein erster Laser-Sperrfilter 20 angeordnet. Zur Erreichung einer Bildkontrolle und/oder Zielverfolgung kann seitlich an dem Gehäuse 95 eine TV-Kamera 85 angeordnet werden. Eine für den Anschluss der TV-Kamera 85 im Gehäuse 95 vorgesehene Oeffnung 95' (Fig. 1) wird, sofern keine TV-Kamera angebaut wird, mit einem nicht näher dargestellten Deckel verschlossen. Im Bereich der Oeffnung 95' ist weiterhin ein zweiter Laser-Sperrfilter 80 angeordnet. Die beiden Laser-Sperrfilter 20 und 80 dienen der Absorption restlicher Laserstrahlen.

Die dem optischen System 90 zugeordneten Teile 50, 45, 40, 35, 30, 25 und 80 sowie die dem Laser-Entfernungsmesser 60 zugeordneten Teile 65, 70 und 75 sind, wie in Fig. 1 dargestellt, in dem Gehäuse 95 des Visiers 100 angeordnet und mit nicht dargestellten Mitteln gehalten. Eine nicht dargestellte Halterung für das Okular 10 und den Sperrfilter 20 sowie der eigentliche Laser-Entfernungsmesser 60 sind an der Rückseite des Gehäuses 95 angeordnet.

Gemäss Fig. 1 ist der Hauptspiegel 50 in einem schematisch dargestellten Lagerkörper 51 um eine Elevationsachse X in Pfeilrichtung X' schwenkbar gelagert, wobei der Lagerkörper 51 zusammen mit dem Hauptspiegel 50 um eine Achse Y in Pfeilrichtung Y' drehbar ist. Zur Erfassung der in Pfeilrichtung Y' orientierten Drehbewegung ist eine erste Kodierscheibe 52 und zur Erfassung der in Pfeilrichtung X' orientierten Schwenkbewegung ist eine zweite Kodierscheibe 52' vorgesehen. Der Hauptspiegel 50 mit einer nicht näher bezeichneten und dargestellten, oberflächenverspiegelten Glasplatte versehen.

Das erste, dem Hauptspiegel 50 entsprechend zugeordnete Umlenkprisma 45 ist für eine Strahlenumlenkung von 90° ausgebildet und weist an der unteren, dem Hauptspiegel 50 zugewandten Seite eine Aperturblende 46 auf. Die mit nicht dargestellten Mitteln an dem Umlenkprisma 45 befestigte Aperturblende 46 dient der Begrenzung des Strahlendurchmessers im visuellen Bereich.

Das zwischen dem ersten Umlenkprisma 45 und dem ersten Strahlenteiler 35 angeordnete Objektiv 40 ist als zweilinsiges Achromatsystem ausgebildet.

Der erste Strahlenteiler 35 dient der Ausspiegelung der Laserstrahlung, welche über die erste Linse 65 und dem Linsensystem 70 dem Empfänger 75 zugeleitet wird. Die Teile 65 und 70 dienen der afokalen Weiterleitung der IR-Strahlen in den Empfänger 75.

Der zweite Strahlenteiler 30 dient zur Umlenkung der visuellen Strahlung auf das mit einer Rückflächen-Verspiegelung versehene zweite Umlenkprisma 25, welches die Strahlung in Richtung der optischen beziehungsweise der Okularachse A5 lenkt.

Das Okular 10 dient der Betrachtung und der Vergrösserung des Bildes zusammen mit dem Strichplattenbild und der Strichplatte 15.

Die mit dem zweiten Strahlenteiler 30 erreichbare Strahlen-Aufteilung ermöglicht zusätzlich zu der visuellen Betrachtung mittels dem Okular 10 die Verwendung der bereits erwähnten TV-Kamera 85.

Die Arbeitsweise des Visiers 100 mit dem erfindungsgemässen optischen System 90 wird nachstehend im Einzelnen beschrieben :

Zunächst findet der Richtvorgang mittels dem Visier 100 statt, bei welchem Vorgang beispielsweise eine nicht dargestellte Waffe, auf welcher das Visier 100 montiert ist, nach Höhe und Seite auf ein Objekt ausgerichtet wird. Hierbei gelangt das Bild des Objekts als Strahlung A1 auf den Hauptspiegel 50, wird unabhängig von der Winkelstellung des Hauptspiegels 50 als eine von der Aperturblende 46 begrenzte Strahlung A2 auf das erste Umlenkprisma 45 reflektiert, von diesem um einen Winkel von 90° umgelenkt und als Strahlung A3 über das Objektiv 40 und dem ersten Strahlenteiler 35 dem zweiten Strahlenteiler 30 und von dort als Strahlung A4 dem zweiten Umlenkprisma 25 zugeleitet. Von dem zweiten Umlenkprisma 25 wird die Strahlung A5 über den ersten Sperrfilter 20 dem Okular 10 und somit dem Auge 5 des Beobachters zugeführt.

Bei zusätzlicher Vermessung mittels dem Laser-Entfernungsmesser 60 wird der von dem Lasersender 57 gesandte Strahl L1 von dem Umlenkprisma 56 als Strahl L2 durch eine nicht dargestellte Oeffnung des Gehäuses 95 auf den Umlenkspiegel 55, von dort koaxial zur optischen Strahlung A2 als Strahl L3 auf den Hauptspiegel 50 und von dort als Strahl L4 auf das Objekt geführt. Der von dem Objekt reflektierte und nicht näher bezeichnete und dargestellte Laserstrahl trifft wieder auf den Hauptspiegel 50 und verläuft parallel zu den optischen Strahlen als weitgehend gemeinsame Strahlung A1, A2 und A3 bis zu dem ersten Strahlenteiler 35. Von dem ersten Strahlenteiler 35 wird die Laserstrahlung ausgespiegelt und als Strahl L5 über die erste Linse 65 und dem Linsensystem 70 dem Empfänger 75 zugeführt.

**Patentansprüche**

1. Optisches System (90) für ein Visier (100) zur Verfolgung und zur Vermessung eines Zieles, mit einem Lasersender (57) und- empfänger (75), die mit einem Teil des optischen Systems einen Entfernungsmesser bilden, dadurch gekennzeichnet, dass in Richtung eines in das Visier einfallenden Strahles (A1) folgende optische Bauteile angeordnet sind : ein um eine erste Achse (Y) und um eine zweite Achse (X) schwenkbarer Hauptspiegel (50), eine Aperturblende (46), ein erstes Umlenkprisma (45), ein Objektiv (40), ein erster Strahlenteiler (35), in einem ersten Teilstrahl des ersten Strahlenteilers ein zweiter Strahlenteiler (30), in einem zweiten Teilstrahl des zweiten Strahlenteilers ein zweites Umlenkprisma (25) und ein Okular (10), sowie im zweiten Teilstrahl des ersten Strahlenteilers der Laserempfänger (75) und dass der Lasersender (57) so zum Hauptspiegel (50) des optischen Systems (90) angeordnet ist, dass mindestens ein Teilstück (L3) des Strahlenganges des aus dem Sender austretenden Strahls (L1) an der Aperturblende (46) vorbei im wesentlichen parallel zum einfallenden, und vom Hauptspiegel abgelenkten Lichtstrahl (A2) auf den Hauptspiegel auftrifft, damit ein zum einfallenden Strahl (A1) im wesentlichen parallel austretender Laserstrahl (L4) entsteht.

2. Optisches System nach Anspruch 1, dadurch gekennzeichnet, dass im ersten Teilstrahl des zweiten Strahlenteilers (30) eine TV-Kamera angeordnet ist.

3. Optisches System nach einem der Ansprüche 1 oder 2, dadurch gekennzeichnet, dass im Strahlengang (L1, L2, L3, L4) des Laserstrahls aus dem Lasersender (57) vor dem Hauptspiegel (50) ein Umlenkspiegel (55) angeordnet ist.

**Claims**

1. Optical system (90) for a sighting device (100) for tracking and ranging a target, having a laser transmitter (57) and receiver (75), which form a range finder with a part of the optical system, characterised in that the following optical components are arranged in the direction of a beam (A1) incident into the sighting device : a main mirror (50) pivotable round a first axis (Y) and round a second axis (X), an aperture diaphragm (46), a first deflection prism (45), an objective lens (40), a first beam splitter (35), a second beam splitter (30) in a first beam portion of the first beam splitter, a second deflection prism (25) and an eyepiece (10) in a second beam portion of the second beam splitter, and the laser receiver (75) in the second beam portion of the first beam splitter, and in that the laser transmitter (57) is so arranged with respect to the main mirror (50) of the optical system (90) that at least one portion (L3) of the beam path of the beam (L1) emerging from the transmitter strikes the main mirror, missing the aperture diaphragm (46), substantially parallel to the incident light beam (A2) deflected from the main mirror, so that there is a laser beam (L4) emerging substantially parallel to the incident beam (A1).

2. Optical system according to claim 1, characterised in that a TV camera is arranged in the first beam portion of the second beam splitter (30).

3. Optical system according to one of claims 1 or 2, characterised in that in the beam path (L1, L2, L3, L4) of the laser beam from the laser transmitter (57), a deflection mirror (55) is arranged in front of the main mirror (50).

**Revendications**

1. Système optique (90) pour un viseur (100) destiné à la poursuite et à la mesure d'un but, avec un émetteur laser (57) et un récepteur laser (75) qui, avec une partie du système optique, constituent un dispositif de mesure de distance, système optique caractérisé en ce que, en direction d'un faisceau (A1) arrivant sur le viseur, sont disposées les parties optiques constituantes suivantes : un miroir principal (50) susceptible de pivoter autour d'un premier axe (Y) et d'un second axe (X), un diaphragme d'ouverture (46), un premier prisme de déviation (45), un objectif (40), un premier diviseur de faisceau (35), un second diviseur de faisceau (30) sur un premier faisceau partiel du premier diviseur de faisceau, un second prisme de déviation (25) et un oculaire (10) sur un second faisceau partiel du second diviseur de faisceau, ainsi que le récepteur laser (75) sur un second faisceau partiel du premier diviseur de faisceau, et l'émetteur laser (57) est disposé de façon telle par rapport au miroir principal (50) du système optique (90), qu'au moins une partie (L3) du trajet du faisceau (L1), sortant de l'émetteur, arrive sur le miroir principal, au-delà du diaphragme d'ouverture (46), en pratique parallèlement au faisceau de lumière incident (A2) dévié par le miroir principal, de sorte que l'on a un faisceau laser sortant (L4) en pratique parallèle au faisceau incident (A1).

2. Système optique selon la revendication 1, caractérisé en ce qu'une caméra de télévision est disposée sur le premier faisceau partiel du second diviseur de faisceau (30).

3. Système optique selon une des revendications 1 ou 2, caractérisé en ce qu'un miroir de déviation (55) est disposé avant le miroir principal (50) sur le trajet (L1, L2, L3, L4) du faisceau laser en provenance de l'émetteur laser (57).

FIG. 1

FIG. 2